# EUROPÄISCHE PATENTSCHRIFT

(11) **EP 2 725 272 B1**
(45) Veröffentlichungstag und Bekanntmachung des Hinweises auf die Patenterteilung: **26.04.2017**
(21) Anmeldenummer: 13189325.7
(22) Anmeldetag: 18.10.2013
(51) Int. Cl.: F16L 13/14

(54) **Hülse für unlösbare Verbindung, Verfahren zur Herstellung einer Hülse und System mit einer Hülse**
Sleeve for non-detachable connection, method for the manufacture of a sleeve and system with a sleeve
Douille pour liaison inamovible, procédé de fabrication d'une douille et système comprenant une douille

(30) Priorität: 23.10.2012 DE 102012110086
(43) Veröffentlichungstag der Anmeldung: 30.04.2014
(73) Patentinhaber: Viega Technology GmbH & Co. KG, 57439 Attendorn (DE)
(72) Erfinder: König, Manfred, 57439 Attendorn (DE); Avci, Mesut, 57439 Attendorn (DE)
(74) Vertreter: Cohausz & Florack

(56) Entgegenhaltungen:
- EP-A1- 2 133 161
- EP-A2- 1 316 753
- WO-A1-2010/003951
- US-A- 5 261 706

## Beschreibung

Die vorliegende Erfindung betrifft eine Hülse für eine unlösbare Verbindung zweier rohrförmiger Enden mit einem im Wesentlichen zylindrischen Hülsenkörper, mit einem eine erste Hülsenöffnung aufweisenden ersten Hülsenende und mit einem eine zweite Hülsenöffnung aufweisenden zweiten Hülsenende, wobei der Hülsenkörper aus einem umgeformten Blech aus Metall geformt ist und zwei Kanten des Blechs miteinander verbunden sind. Darüber hinaus betrifft die Erfindung auch ein Verfahren zur Herstellung einer Hülse und ein System mit einer Hülse.

Hülsen der eingangs genannten Art sind aus dem Stand der Technik bereits bekannt. So offenbart beispielsweise die internationale Patentanmeldung WO 2010/003951 eine Gleithülse zur Herstellung einer unlösbaren Verbindung zwischen einem Rohrende und einem Fitting. Die dort offenbarte Gleithülse kann axial auf ein Kraftübertragungselement aufgeschoben werden, wodurch das Rohrende von außen im Wesentlichen radial einwärtig auf einen Stützkörper des Fittings gepresst wird und so eine dauerhafte und dichte Verbindung zwischen dem Rohrende und dem Fitting erzielt wird. Dabei können rohrförmige Enden aber nicht nur Rohrenden oder Fittingstützkörper sein, sondern beispielsweise auch Anschlussstutzen von Armaturen.

Beim Aufschieben einer solchen Hülse auf das Kraftübertragungselement muss diese hohen Kräften standhalten, da durch das Aufschieben der Hülse auf das Kraftübertragungselement eine ausreichende Verpressung des Rohrendes erzielt werden muss, um eine dichte und dauerhafte Verbindung mit dem Rohrende herzustellen.

Zudem müssen solche Hülsen in geometrischer Hinsicht gewissen Rahmenbedingungen genügen. So ist es aufgrund der benötigten Kräfte regelmäßig notwendig, dass ein Presswerkzeug zum Aufschieben der Hülse auf das Kraftübertragungselement eingesetzt wird. Hierbei kommen auch häufig Presswerkzeuge mit radial einwärtig bewegten Pressbacken zum Einsatz. Entsprechend muss die Hülse Angriffsflächen bieten, mittels welcher die Hülse direkt axial aufgeschoben werden kann oder welche aufgrund einer radial einwärtigen Schließbewegung der Pressbacken eine axiale Bewegung der Hülse zum Aufschieben auf das Kraftübertragungselement ermöglichen.

Wie dem Stand der Technik der WO 2010/003951 weiterhin zu entnehmen ist, müssen solche Hülsen unter Umständen nicht nur eine komplexe Struktur aufweisen können, um Interaktionen der Hülse mit dem Presswerkzeug zu ermöglichen, sondern auch um Interaktionen der Hülse mit dem Kraftübertragungselement, wie beispielsweise Einrastvorgänge, zu ermöglichen.

Aufgrund dieser Anforderungen an die Stabilität und Funktionalität werden gattungsgemäße Hülsen zur Herstellung einer unlösbaren Verbindung zweier rohrförmiger Enden entweder durch Drehen oder Fräsen aus massiven Rohlingen gefertigt oder gegossen. Dabei ist die Materialauswahl aufgrund der geforderten Zerspanbarkeit oder Gießbarkeit des Materials eingeschränkt. Im Stand der Technik kommt insbesondere Messing als Material für die gattungsgemäßen Hülsen zum Einsatz.

Die steigende Entwicklung der Metallpreise, insbesondere bei Kupfer als Hauptbestandteil von Messing, vermindern jedoch die Wirtschaftlichkeit von Verbindungssystemen, in denen diese Rohstoffe, wie bei der Herstellung der beschriebenen Hülsen üblich, verwendet werden.

Hinzu tritt, dass eingangs genannte Hülsen in Kunststoffrohrsystemen zum Einsatz kommen, beispielsweise zur Verbindung von Kunststoffrohren mit Fittings. In diesem Marktsegment herrscht ein besonders hoher Kostendruck.

Eine Umgestaltung einzelner Komponenten ist allerdings insofern nachteilig, als dadurch in der Regel eine Anpassung weiterer Komponenten des Verbindungsystems nötig wird, also beispielsweise des Kraftübertragungselements oder des Fittings.

Die US 5,261,706 A beschreibt eine Schlauchkupplung zur Verbindung mit einem deformierbaren Schlauch oder Rohr. Der zu verbindende Schlauch wird auf ein Fitting mit einem kegelsegmentförmigen Abschnitt aufgeschoben und durch eine ebenfalls kegelsegmentförmige Hülse gesichert. Die Hülse kann aus Blech gefertigt sein.

Die EP 1316 753 A2 betrifft eine Anschlussvorrichtung für ein Rohrende mit einem Anschlussstutzen. Das Rohrende wird durch ein Verpressen einer Hülse auf dem Anschlussstutzen gesichert.

Aus der EP 2 133 161 A1 ist eine Hülse und ein Verfahren zur Herstellung einer Hülse aus rundgebogenen Blech aus Metall bekannt, wobei die Hülse am Stoß mit einer Schweißnaht verbunden wird. Ein Hülsenende kann eine Aufgleitfase oder Aufgleitrundung aufweisen.

Ausgehend von diesem Stand der Technik liegt der Erfindung die Aufgabe zugrunde, eine gattungsgemäße Hülse bzw. ein System mit einer solchen Hülse und ein Verfahren zu ihrer Herstellung anzugeben, wobei einerseits eine wirtschaftliche und einfache Produktion ermöglicht wird und gleichzeitig die aus dem Stand der Technik bekannte Funktionalität möglichst beibehalten werden kann.

Erfindungsgemäß wird die oben genannte Aufgabe dadurch gelöst, dass mindestens ein Hülsenende umgebogen ist und dass das erste Hülsenende nach außen eingerollt ist.

Dadurch, dass der Hülsenkörper aus einem umgeformten Blechstreifen aus Metall geformt ist, wird erreicht, dass eine erhebliche Materialeinsparung von bis zu 20% gegenüber Hülsen aus dem Stand der Technik erzielt wird. Dadurch kann eine sehr wirtschaftliche Produktion der Hülsen erfolgen, da die Hülse regelmäßig einen signifikanten Anteil der Herstellungskosten in Form von Materialkosten einnimmt. Zudem kommen bei der Verwendung von Metallblechen auch andere Materialien als Messing zum Einsatz, sodass auch hierdurch eine wirtschaftliche Produktion ermöglicht wird. Es wurde erkannt, dass trotz der Verwendung eines Blechs zur Herstellung der Hülse eine ausreichende Stabilität der Hülse gewährleistet werden kann.

Als Blechdicken werden vorzugsweise Dicken von 0,1 bis 5 mm, besonders bevorzugt von 0,2 - 2 mm, verwendet.

Indem zwei Kanten des Blechs miteinander verbunden sind, kann in Verbindung mit der Umformung des Blechs auf einfache Weise eine geschlossene Hülse aus einem Blech hergestellt werden. Es wurde festgestellt, dass eine solche Verbindung ausreicht, um den Kräften, die bei der Verwendung erfindungsgemäßer Hülsen auftreten, standhalten zu können.

Dabei können sowohl eine formschlüssige, kraftschlüssige oder material- bzw. stoffschlüssige Verbindungen vorgesehen sein, wie auch Kombinationen hiervon. Ein Stoffschluss wird bevorzugt durch Stoffschmelzverfahren, wie beispielsweise Laserschweißen, erzeugt. Es können aber auch andere geeignete Schweißverfahren, wie beispielsweise Widerstandsschweißen, angewandt werden.

Die zwei Kanten des Blechs sind vorzugsweise parallele Kanten, sodass der Hülsenkörper eine Verbindungsstelle aufweist, welche im Wesentlichen parallel zur Achse der im Wesentlichen zylindrischen Hülse verläuft. Die Verbindungsstelle erstreckt sich dabei vorzugsweise vom ersten Hülsenende bzw. von der ersten Hülsenöffnung bis zum zweiten Hülsenende bzw. zur zweiten Hülsenöffnung.

Unter einem im Wesentlichen zylindrischen Hülsenkörper wird verstanden, dass die erste Hülsenöffnung und die zweite Hülsenöffnung die im Wesentlichen parallelen, vorzugsweise kreisförmigen Grund- und Deckflächen eines Zylinders, vorzugsweise also eines Kreiszylinders bilden. Der durch das umgeformte Blech gebildete Hülsenkörper kann dabei allerdings durch Bearbeitungsschritte, wie Umbiegen oder Aufweiten, von einem Verlauf parallel zur Hülsen- bzw. Zylinderachse abweichen.

Erfindungsgemäß wird dadurch, dass mindestens ein Hülsenende umgebogen ist, weiterhin erreicht, dass die Funktionalität der gattungsgemäßen Hülsen aus dem Stand der Technik weitestgehend erhalten bleibt. So kann beispielsweise durch ein vorzugsweise nach außen umgebogenes Hülsenende ein Angriffspunkt oder eine Angriffsfläche für ein Presswerkzeug bereitgestellt werden, mit welchem die Hülse auf ein weiteres Werkstück, wie ein Rohrende oder ein Kraftübertragungselement, aufgeschoben oder gezogen werden kann. Zudem können durch ein Umbiegen vorzugsweise nach innen auf einfache Weise auch Funktionselemente, wie Haken oder Rastvorsprünge an der Hülse bereitgestellt werden.

Dabei ist vorzugsweise das gesamte Hülsenende der Hülse umgebogen, sodass eine im Wesentlichen ringförmig umlaufende Biegung entsteht. Es ist aber ebenso vorstellbar, dass das Hülsenende nur abschnittsweise umgebogen ist. Die Richtung, der Grad und die Form der Umbiegung hängen dabei von der mit dem mindestens einen umgebogenen Hülsenende beabsichtigten Funktion ab.

Durch die erfindungsgemäße Hülse kann somit eine Hülse zur Verfügung gestellt werden, wobei aufgrund flexibler Materialauswahl und geringem Materialverbrauch eine wirtschaftliche Produktion ermöglicht wird und gleichzeitig die aus dem Stand der Technik bekannte Funktionalität und Stabilität der Hülse aufgrund des Umbiegens mindestens eines Hülsenendes trotz der Herstellung der Hülse aus einem Metallblech zumindest teilweise beibehalten werden kann. Insbesondere kann mit einer erfindungsgemäßen Hülse die aus dem Stand der Technik bekannte Funktionalität vollständig beibehalten werden.

Das erste Hülsenende ist nach außen eingerollt.

Es wurde erkannt, dass durch ein Umbiegen des ersten Hülsenendes nach außen auf einfache Weise am ersten Hülsenende eine Art Flanschbereich bereitgestellt werden kann, sodass insbesondere eine Angriffsfläche für ein (Press-)Werkzeug zu Verfügung gestellt werden kann. Insbesondere kann damit eine gegenüber der Hülsenachse geneigte Angriffsfläche bereitgestellt werden, sodass auch eine radial einwärtige Bewegung des Presswerkzeugs in eine axiale Bewegung der Hülse bedingt.

Ist das erste Hülsenende so weit umgebogen, dass es eingerollt ist, kann ein besonders formstabiles Hülsenden erreicht werden. Dabei ist das erste Hülsenende im Längsschnitt im Wesentlichen kreis- oder teilkreisförmig eingerollt. Dabei kann das umgebogene erste Hülsenende das Aufschieben der Hülse ohne eine wesentliche Verformung des ersten Hülsenendes erfolgen.

Durch das Einrollen des ersten Hülsenendes entsteht insbesondere ein ringförmig um die erste Hülsenöffnung laufender Hohlraum am ersten Hülsenende. Dabei muss allerdings kein vollständiger Hohlraum entstehen, sondern es kann auch nur eine Kehlung oder Rille entstehen.

Ist der Hülsenkörper von dem ersten Hülsenende zum zweiten Hülsenende zumindest abschnittsweise konisch aufgeweitet, wird gemäß einer weiteren Ausgestaltung der erfindungsgemäßen Hülse zum einen erreicht, dass ein Aufschieben der Hülse auf das entsprechende Werkstück erleichtert wird und zum anderen die axiale Bewegung der Hülse effizient für eine im Wesentlichen radial einwärtige Verpressung der rohrförmigen Enden genutzt werden kann. Es wurde erkannt, dass, obwohl die Hülse aus einem umgeformten Blech aus Metall mit bis zu 20% weniger Material geformt ist, eine ausreichende Stabilität der Hülse für solche Verpressungen gegeben ist.

Durch den zumindest abschnittsweise konisch aufgeweiteten Hülsenkörper vergrößert sich der Innendurchmesser des Hülsenkörpers vom ersten Hülsenende zum zweiten Hülsenende. Dabei vergrößert sich vorzugsweise bei im Wesentlichen konstant gehaltener Wanddicke des Hülsenkörpers der Außendurchmesser des Hülsenkörpers entsprechend.

Der aufgeweitete Hülsenkörper kann Steigungen von bis zu 75° gegenüber der Hülsenachse aufweisen. Vorzugsweise weist der Hülsenkörper allerdings eine Steigung gegenüber der Hülsenachse von kleiner 45°, besonders bevorzugt von 5° - 25°, weiterhin bevorzugt von 5° - 20°, auf.

Gemäß einer weiteren Ausgestaltung der erfindungsgemäßen Hülse ist das zweite Hülsenende zumindest abschnittsweise aufgeweitet. Dadurch wird das Aufschieben der Hülse mit dem zweiten Ende voran auf ein weiteres Werkstück, beispielsweise ein Kraftübertragungselement, vereinfacht. Zudem ist denkbar, dass durch die zusätzliche Querschnittsvergrößerung der Hülse an ihrem zweiten Hülsenende ein Angriffspunkt oder eine Angriffsfläche für ein (Press-)Werkzeug bereitgestellt werden kann, so dass das Aufschieben der Hülse weiter erleichtert wird. Vorzugsweise wird das zweite Hülsenende allerdings vornehmlich dazu verwendet, im Zuge des Aufschiebens der Hülse bzw. im Anschluss hieran im Rahmen des Pressvorgangs das aufgeweitete zweite Hülsenende im Wesentlichen radial einwärtig gegen das darunter befindliche Werkstück zudrücken, so dass eine zusätzliche Fixierung der Hülse im vollständig aufgeschobenen Zustand erreicht werden kann.

Ist das zweite Hülsenende nach innen umgebogen, insbesondere umgebördelt, kann auf einfache Weise ein Funktionselement gebildet werden, welches beispielsweise als radial einwärtig ausgreifender Rastvorsprung dienen kann. Insbesondere in Kombination mit einem zumindest abschnittsweise aufgeweiteten zweiten Hülsenende, welches dann nach innen umgebogen bzw. umgebördelt wird, kann ein radial einwärts ausgreifender Rastvorsprung gebildet werden, welcher zudem durch ein (Press-)Werkzeug zur zusätzlichen oder endgültigen Fixierung radial einwärts gepresst werden kann.

Besonders vorteilhaft ist das zweite Hülsenende derart aufgeweitet und umgebördelt, dass die Hülse an dem zweiten Hülsenende einen im Wesentlichen radial einwärts ausgreifenden Haken oder Rasthaken, insbesondere einen halbkreisförmigen Rasthaken, aufweist.

Gemäß einer weiteren Ausgestaltung der erfindungsgemäßen Hülse besteht das Blech aus rostfreiem Stahl. Rostfreier Stahl ist korrosions- und säurebeständig, sodass auch unter Feuchtigkeitseinwirkungen die Beständigkeit der unlösbaren Verbindung verwendet werden, wie beispielsweise Stahl mit der Werkstoffnummer 1.4301. Dadurch ist eine sehr wirtschaftliche Produktion möglich.

Vorzugsweise beträgt der kleinste Hülseninnendurchmesser etwa 10 bis 70 mm. Erfindungsgemäße Hülsen können insbesondere für Nennweiten NW von 16 - 63 des anzuschließenden Rohres verwendet werden. Typische Nennweiten sind beispielsweise 16, 32, 40, 50, 63. Der kleinste Innendurchmesser der Hülse kann in etwa der Nennweite des anzuschließenden Rohres in Millimetern entsprechen oder knapp hierüber liegen.

Gemäß einer zweiten Lehre der Erfindung wird die eingangs genannte Aufgabe auch durch ein Verfahren zur Herstellung einer Hülse für eine unlösbare Verbindung zweier rohrförmiger Enden, insbesondere zur Herstellung einer Hülse nach einem der Ansprüche 1 bis 5, gelöst, wobei ein Blech aus Metall bereitgestellt wird, wobei das Blech zu einem im Wesentlichen zylindrischen Hülsenkörper umgeformt wird, indem zwei Kanten des Blechs zueinander gebracht und miteinander verbunden werden, sodass an einem ersten Hülsenende eine erste Hülsenöffnung und an einem zweiten Hülsenende eine zweite Hülsenöffnung entsteht, und wobei mindestens ein Hülsenende umgebogen wird und wobei das erste Hülsenende nach außen eingerollt wird.

Das erfindungsgemäße Verfahren ermöglicht auf einfache Weise die Herstellung einer Hülse, wobei das Herstellungsverfahren eine Reduktion des Materialverbrauchs von 25 % bis zu 60 % gegenüber den bisher verwendeten Hülsen ermöglicht und zudem gegenüber Gießverfahren oder Drehverfahren einfach durchzuführen ist. Dadurch kann eine sehr wirtschaftliche Produktion der Hülsen erfolgen. Es wurde also erkannt, dass trotz der Herstellung der Hülse aus einem Blech und der damit erzielten Materialeinsparung eine ausreichende Stabilität der Hülse gewährleistet werden kann.

Das Bereitstellen des Blechs aus Metall, kann beispielsweise durch Abtrennen, beispielsweise Schneiden, eines vorzugsweise rechteckigen Blechstreifens von einem Blechvorrat, wie einem Metallband erfolgen. Das Blech bzw. der Blechstreifen weist insbesondere zwei im Wesentlichen parallele Längskanten und zwei im Wesentlichen parallele Querkanten auf.

Das Umformen des Blechs zu einem im Wesentlichen zylindrischen Hülsenkörper, indem zwei Kanten des Blechs zueinander gebracht werden, kann beispielsweise mittels Gesenken und/oder Stempeln erfolgen, wobei das Blech beispielsweise erst U-förmig geformt wird und anschließend die zwei Kanten zu einander gebracht werden, sodass im Wesentlichen eine O-förmige Hülse im Querschnitt entsteht. Alternativ kann die im Wesentlichen zylindrische Hülse auch durch Einrollen des Blechs erfolgen.

Die zusammengebrachten Kanten (Längskanten) des Blechs werden dann formschlüssig, kraftschlüssig oder material- bzw. stoffschlüssige oder durch Kombinationen hiervon verbunden. Ein Stoffschluss wird bevorzugt durch Stoffschmelzverfahren, wie beispielsweise Laserschweißen, erzeugt. Durch das Laserschweißverfahren ist das Fügen der zusammengebrachten Kanten besonders effizient und wirtschaftlich durchzuführen. Es können aber auch andere geeignete Schweißverfahren, wie beispielsweise Widerstandsschweißen, oder auch Klebeverfahren angewandt werden.

Die Kanten (Querkanten) im Wesentlichen quer zu den zusammengefügten Kanten bilden dann an einem ersten Hülsenende eine erste Hülsenöffnung und an einem zweiten Hülsenende eine zweite Hülsenöffnung.

Erfindungsgemäß wird dadurch, dass mindestens ein Hülsenende umgebogen wird, weiterhin erreicht, dass die Funktionalität der gattungsgemäßen Hülsen aus dem Stand der Technik weitestgehend erhalten bleibt, da auf diese Weise Funktionselemente, wie Flanschbereiche oder Rasthaken, vorgesehen werden können.

Das Umbiegen kann beispielweise mit einer Bördelmaschine erfolgen. Dabei hängt die Richtung, der Grad und die Form der Umbiegung von der mit dem mindestens einen umgebogenen Hülsenende beabsichtigten Funktion ab.

Insbesondere ein Umbiegen nach außen kann besonders einfach mittel eines Umformstempels erreicht werden, welcher einen innenliegenden Dorn aufweist, der in das umzubiegende oder einzurollende Hülsenende des Hülsenkörpers axial eingeschoben wird. Das umzubiegende oder einzurollende Hülsenende wird dabei durch einen sich an den Dorn anschließenden außenliegenden Radius, von dem das Hülsenende geführt wird, umgebogen bzw. eingerollt.

Optional kann sich an das Fügen und Umformung der Hülse eine Entfettung anschließen, um die während des Herstellungsverfahren verwendeten Öle zu entfernen. Dies ist aber regelmäßig nicht erforderlich.

Das erste Hülsenende wird nach außen eingerollt. Durch ein Umbiegen des ersten Hülsenendes nach außen kann auf einfache Weise am ersten Hülsenende eine Art Flanschbereich hergestellt werden, sodass insbesondere eine Hülse mit einer Angriffsfläche, insbesondere mit einer geneigten Angriffsfläche, für ein (Press-)Werkzeug hergestellt werden kann. Wird das erste Hülsenende so weit umgebogen, dass es eingerollt wird, kann ein besonders formstabiles Hülsenden erreicht werden. Dabei wird das erste Hülsenende derart eingerollt, dass das erste Hülsenende im Längsschnitt im Wesentlichen kreis- oder teilkreisförmig ist. Durch das Einrollen des ersten Hülsenendes entsteht insbesondere ein ringförmig um die erste Hülsenöffnung laufender Hohlraum am ersten Hülsenende. Dabei muss allerdings kein vollständiger Hohlraum entstehen, sondern es kann auch nur eine Kehlung oder Rille entstehen.

Wird der Hülsenkörper von dem ersten Hülsenende zum zweiten Hülsenende zumindest abschnittsweise konisch aufgeweitet, wird erreicht, dass ein Aufschieben der Hülse auf das entsprechende Werkstück erleichtert wird und die axiale Bewegung der Hülse effizient für eine im Wesentlichen radial einwärtige Verpressung der rohrförmigen Enden genutzt werden kann. Durch das zumindest abschnittsweise konische Aufweiten wird insbesondere die Wanddicke des Hülsenkörpers im Wesentlichen nicht verändert, also Innen- und Außendurchmesser des Hülsenkörpers entsprechend aufgeweitet.

Ein konisches Aufweiten kann beispielsweise mittels eines kegelförmigen Umformdorns durchgeführt werden, welcher koaxial in die Hülse eingeführt wird oder mittels eines Rolldorns, welcher an der Innenumfangsfläche entlang rollt und diese radial nach außen aufweitet.

Wird das zweite Hülsenende, insbesondere nachdem der Hülsenkörper von dem ersten Hülsenende zum zweiten Hülsenende zumindest abschnittsweise konisch aufgeweitet wurde, zumindest abschnittsweise aufgeweitet, kann eine Hülse hergestellt werden, bei der das Aufschieben auf ein weiteres Werkstück vereinfacht wird. Auch kann das aufgeweitete zweite Hülsenende der aufgeschobenen Hülse zur Fixierung im Wesentlichen radial einwärtig gegen das darunter befindliche Werkstück gedrückt werden. Auch dieses Aufweiten kann beispielsweise mittels kegelförmigen Umformdorns, welcher koaxial in die Hülse eingeführt wird, oder mit einem Rolldorn, welcher an der Innenumfangsfläche entlang rollt und diese radial nach außen aufweitet, durchgeführt werden.

Wird das zweite Hülsenende nach innen umgebogen, insbesondere umgebördelt, kann auf einfache Weise eine Hülse mit einem Funktionselement gebildet werden, welches beispielsweise als radial einwärtig ausgreifender Rastvorsprung dienen kann. Insbesondere in Kombination mit dem Verfahrensschritt des zumindest abschnittsweisen Aufweitens des zweiten Hülsenendes, welches dann nach innen umgebogen bzw. umgebördelt wird, kann ein radial einwärts ausgreifender Rastvorsprung gebildet werden. Besonders vorteilhaft wird das zweite Hülsenende derart aufgeweitet und umgebördelt, dass ein im Wesentlichen radial einwärts ausgreifender Haken oder Rasthaken, insbesondere ein halbkreisförmiger Rasthaken, entsteht.

Für weitere vorteilhafte Ausgestaltungen des erfindungsgemäßen Verfahrens wird auf die Ausführungen zur erfindungsgemäßen Hülse verwiesen.

Gemäß einer weiteren Lehre der Erfindung wird die eingangs genannte Aufgabe auch durch ein System zum unlösbaren Verbinden zweier rohrförmiger Enden mit einer erfindungsgemäßen Hülse und mit einem im Wesentlichen zylindrischen Kraftübertragungselement mit einem eine erste Öffnung aufweisenden ersten Ende und mit einem eine zweite Öffnung aufweiseneden zweiten Ende gelöst, wobei die Hülse mit dem zweiten Hülsenende auf das erste Ende des Kraftübertragungselement aufschiebbar ist und wobei das Kraftübertragungselement auf seiner Außenumfangsfläche wenigstens eine Rastvertiefung aufweist.

Dass die Hülse mit dem zweiten Hülsenende auf das erste Ende des Kraftübertragungselements aufschiebbar ist, bedeutet insbesondere, dass die Innenumfangsfläche der Hülse und die Außenumfangsfläche des Kraftübertragungselements zumindest abschnittsweise aneinander angepasst sind. So kann der Hülsenkörper zumindest abschnittsweise die gleiche Steigung gegenüber der Hülsenachse wie das Kraftübertragungselement aufweisen. Dabei kann das Kraftübertragungselement beim Ansetzen der Hülse an das Kraftübertragungselement zum Beispiel abschnittsweise flächig an der Hülse anliegen. Allerdings ist auch möglich, dass das Kraftübertragungselement im Längsschnitt im Wesentlichen nur tangential an der Innenumfangsfläche der Hülse anliegt. Im letzteren Fall braucht der Hülsenkörper keinen abschnittsweisen, im Längsschnitt im Wesentlichen linearen Verlauf aufweisen, sondern lediglich einen nach außen gebogenen Verlauf. Dies kann die Herstellung vereinfachen. Des Weiterhin sind die Hülse und das Kraftübertragungselement bevorzugt koaxial angeordnet.

Die Rastvertiefung auf der Außenumfangsfläche des Kraftübertragungselements kann dabei mit dem mindestens einen umgebogenen Hülsenende der Hülse interagieren. Vorzugsweise weist das Kraftübertragungselement die Rastvertiefung an seinem zweiten Ende auf, während das zweite Hülsenende im Wesentlichen radial nach innen umgebogen ist.

Die Rastvertiefung ist vorzugsweise als ringförmig umlaufende Nut vorgesehen. Allerdings können auch abschnittsweise mehreren Rastvertiefungen entlang des Außenumfangs vorgesehen sein.

Die Hülse und das Kraftübertragungselement sind dabei vorzugsweise derart gestaltet, dass die Hülse durch ein Aufschieben auf das Kraftübertragungselement in das Kraftübertragungselement einformbar ist. Dabei ist das Kraftübertragungselement vorzugsweise aus Metall hergestellt, vorzugsweise aus Messing, Kupfer oder einer Kupferlegierung wie Rotguss. Es ist aber auch denkbar, das Kraftübertragungselement aus Kunststoff herzustellen.

Gemäß einer vorteilhaften Ausführungsform des erfindungsgemäßen Systems, vergrößert sich der Außendurchmesser des Kraftübertragungselements konisch vom ersten Ende zum zweiten Ende des Kraftübertragungselements zumindest abschnittsweise. Dadurch kann die axiale Bewegung der Hülse während des Aufschiebens der Hülse auf das Kraftübertragungselement effizient in eine radiale Verpressung umgewandelt werden.

Diese Ausgestaltung des Kraftübertragungselements ist insbesondere in Kombination mit einer Hülse, dessen Hülsenkörper von dem ersten Hülsenende zum zweiten Hülsenende zumindest abschnittsweise konisch aufgeweitet ist, vorteilhaft.

Bevorzugt weist das Kraftübertragungselement zumindest abschnittsweise eine im Wesentlichen zylinderförmige Innenumfangsfläche auf. Dadurch kann ein zu verbindendes rohrförmiges Ende, gegebenenfalls reibschlüssig, in das Kraftübertragungselement eingeführt werden, sodass der Kontakt der Innenumfangsfläche mit dem zu verbindendem rohrförmigen Ende, insbesondere im Bereich der Kraftübertragung, erhöht werden kann.

Ist an der Außenumfangsfläche des Kraftübertragungselements zwischen der Rastvertiefung und dem ersten Ende zudem eine Haltevertiefung angeordnet, kann die Hülse teilweise auf das Kraftübertragungselement aufgeschoben und temporär fixiert werden.

Wie die Rastvertiefung ist die Haltevertiefung vorzugsweise als ringförmig umlaufende Nut vorgesehen. Allerdings können auch abschnittsweise mehreren Rastvertiefungen entlang des Außenumfangs vorgesehen sein.

Die Haltevertiefung auf der Außenumfangsfläche des Kraftübertragungselements kann dabei mit dem mindestens einen umgebogenen Hülsenende der Hülse interagieren. Dabei ist das zweite Hülsenende im Wesentlichen radial nach innen umgebogen. Somit bildet das zweite, im Wesentlichen radial nach innen umgebogene Hülsenende einen Rastvorsprung oder -haken, welcher zunächst mit der Haltevertiefung und anschließend, wenn die Hülse vollständig aufgeschoben ist, mit der Rastvertiefung zur endgültigen Fixierung interagieren kann.

Auch können mehrere Haltevertiefungen vorgesehen sein, sodass mehrere Zwischenpositionen für die Hülse entstehen und ein schrittweises Aufschieben erfolgen kann.

Gemäß einer weiteren Ausgestaltung des erfindungsgemäßen Systems weist das System weiterhin ein Rohrende und ein rohrförmiges Fitting auf, wobei das Rohrende zumindest teilweise auf das Fitting und in das Kraftübertragungselement eingeschoben ist und wobei die Hülse zumindest teilweise auf das Kraftübertragungselement aufgeschoben ist.

Durch ein vollständiges Aufschieben der Hülse auf das Kraftübertragungselement kann so eine unlösbare Verbindung zwischen dem Rohrende und dem Fitting hergestellt werden. Durch die teilweise auf das Kraftübertragungselement aufgeschobene Hülse ist diese temporär fixiert. Dies kann mittels einer Haltevertiefung, durch einen Reibschluss zwischen der Innenumfangsfläche der Hülse und der Außenumfangsfläche des Kraftübertragungselements und/oder durch eine teilweise Einformung der Hülse in das Kraftübertragungselement geschehen. So kann das System zunächst positioniert und die Lage der Komponenten überprüft werden, bevor die Hülse vollständig aufgeschoben wird.

Vorzugsweise sind das Rohrende, das Fitting, das Kraftübertragungselement und die Hülse dabei koaxial angeordnet.

Das Rohrende ist vorzugsweise ein Kunststoffrohr oder ein Kunststoffverbundrohr. Grundsätzlich kann aber auch ein ausreichend verformbares Metallrohr verwendet werden. Das Fitting kann ebenfalls aus Metall oder aus Kunststoff gefertigt sein. Das Fitting kann dabei auch mehrstückig ausgebildet sein und aus unterschiedlichen Materialien gefertigt sein.

Nach einem axialen Aufschieben der Hülse auf das Kraftübertragungselement, kann die Hülse zudem auch durch einen sich anschließenden radial einwärtigen Pressvorgang gesichert werden. Dabei kann sich die Hülse insbesondere in die Rastvertiefung des Kraftübertragungselements einformen.

Die erfindungsgemäße Hülse kann trotz der Materialeinsparungen und ihrer wirtschaftlichen Herstellung in Verfahren zum Herstellen von unlösbaren Verbindungen von rohrförmigen Enden benutzt werden, ohne konstruktive Änderungen an den übrigen Bauteilen oder Werkzeugen vornehmen zu müssen.

So kann die Hülse beispielsweise auch in den in der WO 2010/003951 angegebenen Verfahren zur Herstellung einer unlösbaren Werkstückverbindung verwendet werden.

Hinsichtlich weiterer Vorteile bzw. Merkmale des erfindungsgemäßen Systems wird auf die obigen Ausführungen zu der erfindungsgemäßen Hülse und dem erfindungsgemäßen Verfahren verwiesen.

Es gibt nun eine Vielzahl von Möglichkeiten, die erfindungsgemäße Hülse, das erfindungsgemäße Verfahren und das erfindungsgemäße System auszugestalten und weiterzubilden. Hierzu wird einerseits auf die den unabhängigen Patentansprüchen nachgeordneten abhängigen Patentansprüche und andererseits auf die Beschreibung der nachfolgenden Ausführungsbeispiele in Verbindung mit den Zeichnungen verwiesen. In der Zeichnung zeigt:
Fig. 1a eine Hülse für eine unlösbare Verbindung zweier rohrförmiger Enden aus dem Stand der Technik,
Fig. 1b ein erstes Ausführungsbeispiel einer erfindungsgemäßen Hülse,
Fig. 2a ein Blech aus Metall zur Herstellung eines Ausführungsbeispiels einer erfindungsgemäßen Hülse,
Fig. 2b eine Hülse geformten aus dem Blech aus Fig. 2a zur Herstellung eines Ausführungsbeispiels einer erfindungsgemäßen Hülse, wobei zwei Kanten des Blechs miteinander verbunden sind,
Fig. 2c ein zweites Ausführungsbeispiel einer erfindungsgemäßen Hülse, hergestellt aus dem in Fig. 2b gezeigten Hülse,
Fig. 2d ein drittes Ausführungsbeispiel einer erfindungsgemäßen Hülse, hergestellt aus der in Fig. 2c gezeigten Hülse,
Fig. 2e ein viertes Ausführungsbeispiel einer erfindungsgemäßen Hülse, hergestellt aus der in Fig. 2d gezeigten Hülse,
Fig. 2f das Ausführungsbeispiel aus Fig. 1b, hergestellt aus der in Fig. 2e gezeigten Hülse,
Fig. 3a ein Ausführungsbeispiel eines erfindungsgemäßen Systems, wobei die Hülse teilweise auf das Kraftübertragungselement aufgeschoben ist,
Fig. 3b das Ausführungsbeispiel eines erfindungsgemäßen Systems aus Fig. 3a, wobei die Hülse vollständig auf das Kraftübertragungselement aufgeschoben ist und eine dichte Verbindung zwischen dem Rohrende und dem Fitting hergestellt ist,
Fig. 4a ein Ausführungsbeispiel eines erfindungsgemäßen Systems ähnlich dem aus Fig. 3a, wobei die Hülse teilweise auf das Kraftübertragungselement aufgeschoben ist und
Fig. 4b das Ausführungsbeispiel eines erfindungsgemäßen Systems aus Fig. 4a, wobei die Hülse vollständig auf das Kraftübertragungselement aufgeschoben ist und eine dichte Verbindung zwischen dem Rohrende und dem Fitting hergestellt ist.

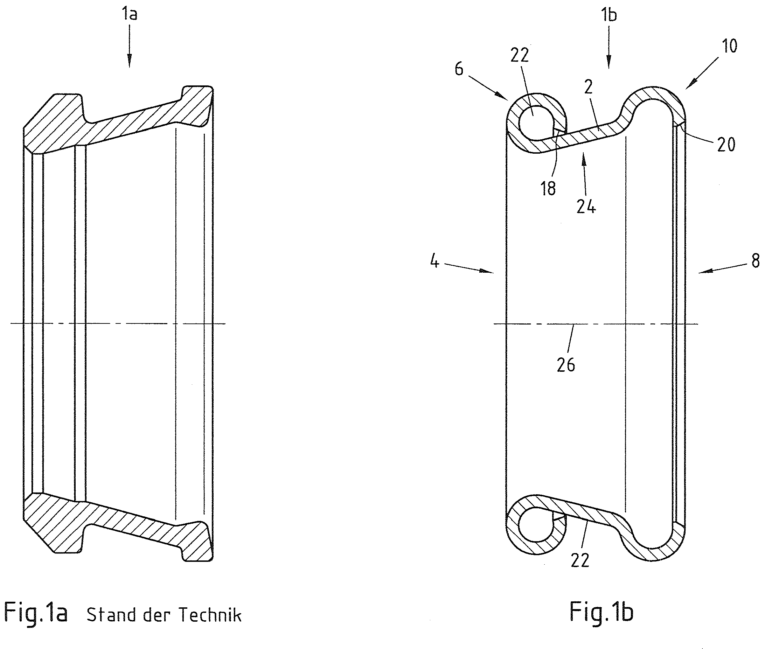

Fig. 1a zeigt einen Längsschnitt einer im Wesentlichen zylindrischen Hülse 1a für eine unlösbare Verbindung zweier rohrförmiger Enden aus dem Stand der Technik. Die Hülse 1a ist aus massivem Material, beispielsweise einer Kupferlegierung gefertigt. Die Hülse 1a kann entweder gegossen werden oder durch Drehen oder Fräsen aus einem Rohling hergestellt sein. Aufgrund der Gestaltung der Hülse 1a aus massivem Material, sind die Herstellungskosten insbesondere wegen des verwendeten Materials und der benötigten Menge des Materials hoch.

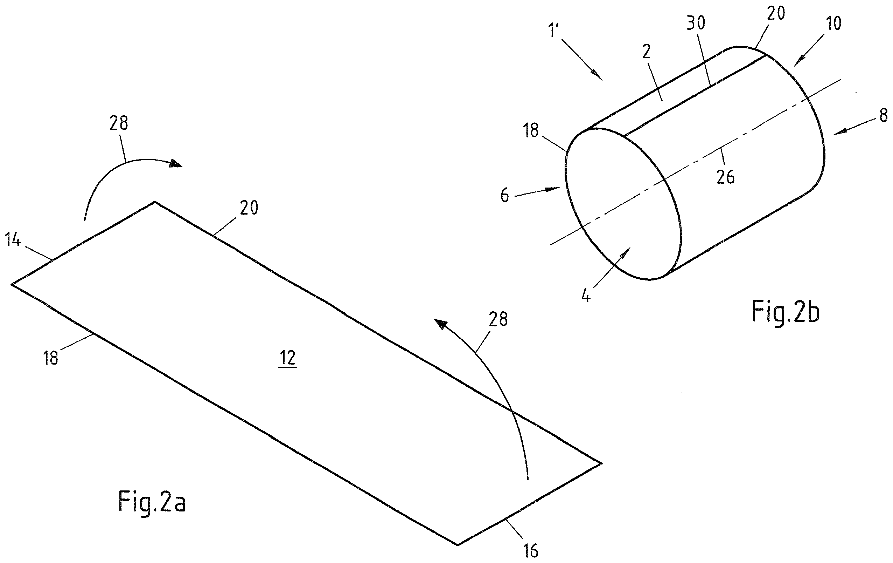

Fig. 1b zeigt ein erstes Ausführungsbeispiel einer erfindungsgemäßen Hülse 1b. Die Hülse 1b weist einen im Wesentlichen zylindrischen Hülsenkörper 2, ein eine erste Hülsenöffnung 4 aufweisendes erstes Hülsenende 6 und ein eine zweite Hülsenöffnung 8 aufweisendes zweites Hülsenende 10 auf. Die Hülse ist dabei aus einem umgeformten Blechstreifen 12 aus Metall hergestellt, dessen zwei Längskanten 14, 16 miteinander verbunden sind (siehe Fig. 2a, 2b).

Das erste Hülsenende 6 der Hülse 1b ist soweit nach außen umgebogen, dass es eingerollt ist. Das erste Hülsenende 6 kann dabei insbesondere so weit eingerollt sein, dass die Kante 18 des ersten Hülsenendes 6 dabei insbesondere die Außenumfangsfläche 22 berühren kann. Das erste Hülsenende 6 ist im Längsschnitt im Wesentlichen kreis- oder teilkreisförmig eingerollt. Durch das Einrollen des ersten Hülsenendes 6 entsteht ein ringförmig um die erste Hülsenöffnung 4 umlaufender Hohlraum 22 am ersten Hülsenende 6. Die Wanddicke der Hülse bleibt dabei im Wesentlichen konstant.

Der Hülsenkörper 2 ist zwischen dem ersten Hülsenden 6 und dem zweiten Hülsenende 10 im Bereich 24 konisch aufgeweitet. Dabei vergrößert sich sowohl der Innendurchmesser als auch der Außendurchmesser des Hülsenkörpers 2 kontinuierlich. Auch in diesem Bereich ist die Wanddicke der Hülse im Wesentlichen konstant. Die Steigung der Innenumfangsfläche im Bereich 24 beträgt ca. 15° gegenüber der Hülsenachse 26. Allerdings sind auch andere Steigungen möglich.

Am zweiten Hülsenende 10 ist die Hülse 1b gegenüber der Aufweitung im Bereich 24 stärker aufgeweitet. Gleichzeitig ist das zweite Hülsenende 10 nach radial nach innen umgebördelt. Die Kante 20 zeigt im Wesentlichen radial einwärts. Das zweite Hülsenende 10 ist dabei derart aufgeweitet und umgebördelt, dass die Hülse 1b an ihrem zweiten Hülsenende 10 einen im Wesentlichen radial einwärts ausgreifenden, halbkreisförmigen Rasthaken aufweist. Die geometrische Form des zweiten Hülsenendes 10 kann aber grundsätzlich auch anders gestaltet sein.

Die Hülse 1b ist im Wesentlichen rotationssymmetrisch zur Hülsenachse 26 ausgebildet. Dies vereinfacht insbesondere den Herstellungsprozess. Allerdings kann die Hülsenform auch abhängig von der Ausrichtung der Schnittebene durch die Hülsenachse 26 variieren.

Im Vergleich mit der in Fig. 1a gezeigt Hülse 1a aus dem Stand der Technik kann mit der in Fig. 1b gezeigten Hülse 1b eine Materialeinsparung von 25 % bis zu 60 % erreicht werden und zudem können günstigere Materialien eingesetzt werden. Dabei werden in der Regel bei größeren Nennweiten größere Material- bzw. Gewichtseinsparungen erreicht. Die aus dem Stand der Technik bekannte Funktionalität und Stabilität der Hülse 1b kann insbesondere aufgrund des Umbiegens der Hülsenenden 6, 10 trotz der Herstellung der Hülse 1b aus dem Blechstreifen 12 zumindest teilweise beibehalten werden.

So kann mittels des ersten eingerollten Hülsenendes 6 eine für ein Presswerkzeug günstige gegenüber der Hülsenachse 26 geneigte Angriffsfläche zur Verfügung gestellt werden, um die Hülse 1b entlang ihrer Achse 26 zu bewegen, während durch das aufgeweitete und umgebördelte zweite Hülsenende 10 ein Rastvorsprung in Form eines Rasthakens bereitgestellt werden kann, welcher mit weiteren Bauteilen der unlösbaren Verbindung wechselwirken kann und so den Montageprozess vereinfachen und die Verbindung dauerhafter machen kann.

In den Fig. 2a bis 2f wird beispielhaft die Herstellung der Hülse 1b und es werden weitere Ausführungsformen erfindungsgemäßer Hülsen dargestellt.

Fig. 2a zeigt einen Blechstreifen 12 aus Metall zur Herstellung unterschiedlicher Ausführungsbeispiele von erfindungsgemäßen Hülsen. Der Blechstreifen besteht in diesem Fall aus rostfreiem Edelstahl. Der Blechstreifen 12 kann beispielsweise von einem Blechband abgetrennt worden sein. Der Blechstreifen 12 ist im Wesentlichen rechteckig und weist zwei Längskanten 14, 16 und zwei Querkanten 18, 20 auf. Der Blechstreifen 12 wird wie durch die Pfeile 28 angedeutet umgeformt, sodass die zwei im Wesentlichen parallelen Längskanten 14, 16 zueinander gebracht werden und eine im Wesentlichen zylindrische Hülse 1' als Zwischenprodukt entsteht.

Diese Hülse 1' ist in Fig. 2b gezeigt und weist einen im Wesentlichen zylindrischen Hülsenkörper 2, an dem ersten Hülsenende 6 eine durch die Kante 18 begrenzte erste Hülsenöffnung 4 und an dem zweiten Hülsenende 10 eine durch die Kante 20 begrenzte zweite Hülsenöffnung 8 auf.

Die zwei Längskanten 14, 16 sind mittels Laserschweißen miteinander verbunden, sodass die Naht 30 entsteht. Es können aber auch andere Verbindungsmethoden zum Einsatz kommen.

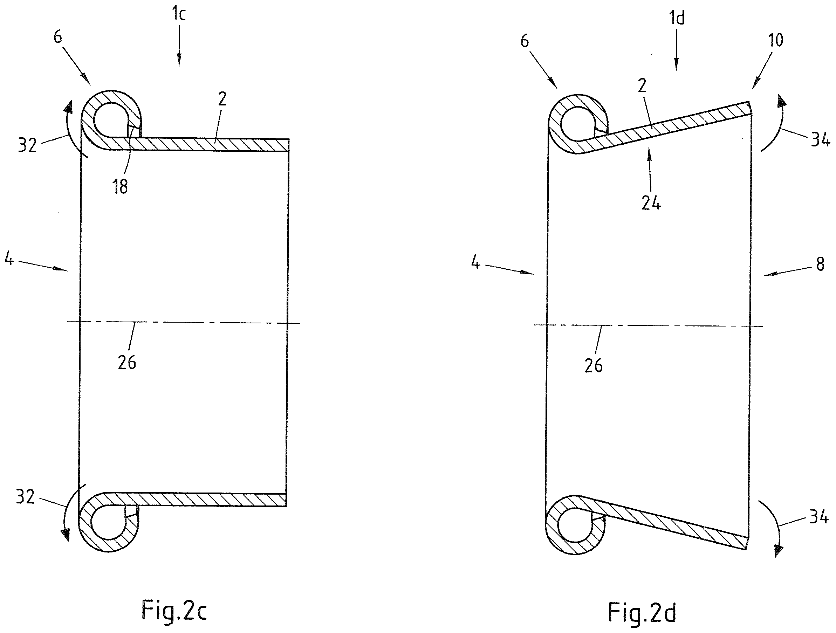

In Fig. 2c ist ein zweites Ausführungsbeispiel einer erfindungsgemäßen Hülse 1c, hergestellt aus der in Fig. 2b gezeigten Hülse 1', gezeigt. Das erste Hülsenende 6 wurde wie durch die Pfeile 32 angedeutet nach außen umgebogen und eingerollt, sodass der um die erste Hülsenöffnung 4 umlaufende Hohlraum 22 entsteht.

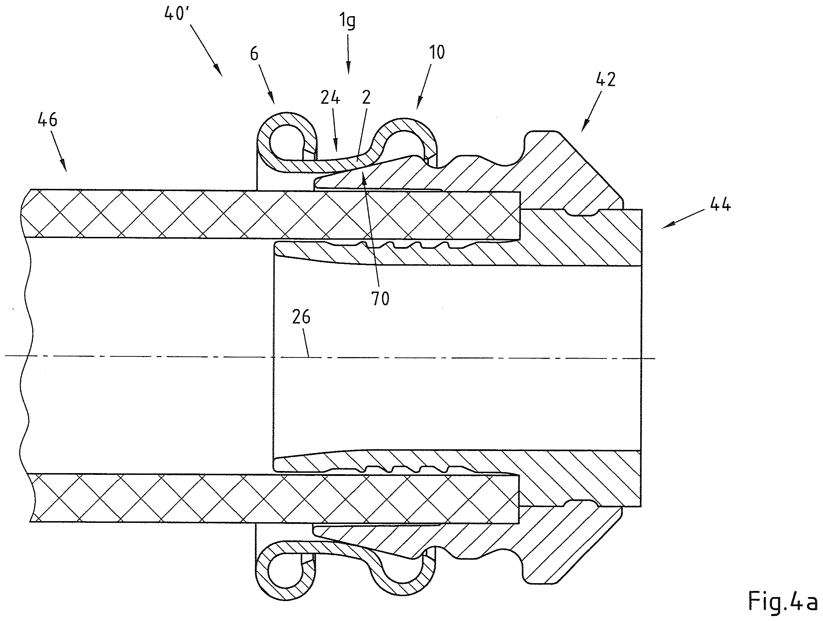

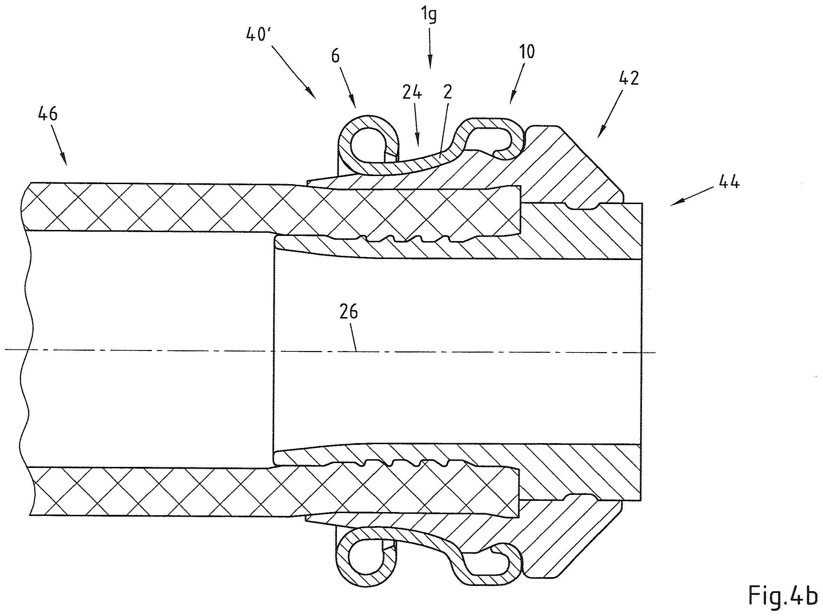

Fig. 2d zeigt ein drittes Ausführungsbeispiel einer erfindungsgemäßen Hülse 1d, welche aus der in Fig. 2c gezeigten Hülse 1c hergestellt wurde. Dazu wurde der Hülsenkörper 2 radial aufgeweitet wie durch die Pfeile 34 angedeutet. Dadurch kann das Aufschieben der Hülse vereinfacht werden und durch den Grad der Aufweitung bzw. durch die Steigung des Bereichs 24 gegenüber der Hülsenachse 26 das Verhältnis zwischen axialer Bewegung der Hülse 1d und radialer Verpressung beispielsweise beim Aufschieben auf ein Kraftübertragungselement angepasst werden. Hier weist der Hülsenkörper nach der Aufweitung einen abschnittsweisen, im Längsschnitt im Wesentlich linearen Verlauf auf. Es ist allerdings ebenfalls möglich, dass der Hülsenkörper nach dem Aufweiten einen nach außen gebogenen Verlauf aufweist. Dies kann insbesondere die Herstellung vereinfachen. Ein Ausführungsbeispiel einer solchen Hülse ist in den Fig. 4a und 4b gezeigt.

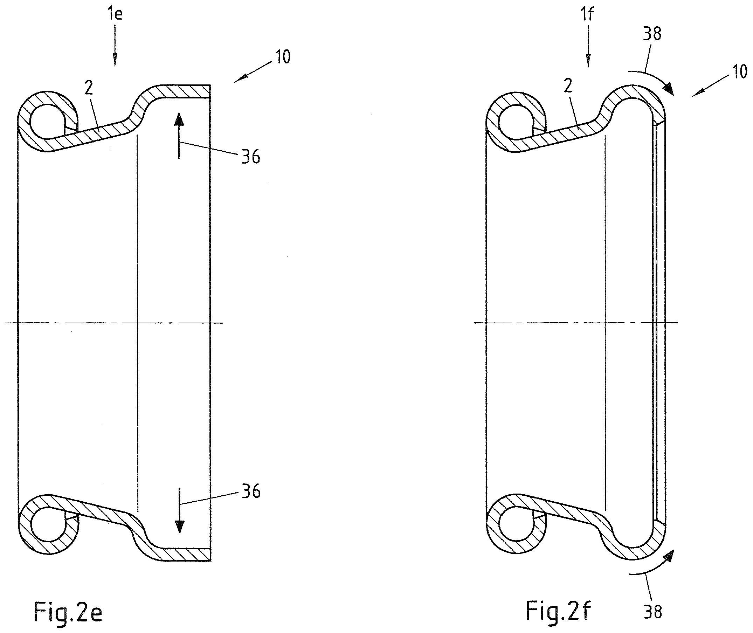

Fig. 2e zeigt ein viertes Ausführungsbeispiel einer erfindungsgemäßen Hülse 1e, hergestellt aus der in Fig. 2d gezeigten Hülse 1d. Dazu wurde der Hülsenkörper 2, nachdem der Hülsenkörper von dem ersten Hülsenende 6 zum zweiten Hülsenende 10 konisch aufgeweitet wurde, zusätzlich radial aufgeweitet wie durch die Pfeile 36 angedeutet. Das zweite Hülsenende 10 kann nach dem Aufschieben der Hülse 1e radial einwärtig gepresst werden, sodass eine Fixierung der Hülse 1e beispielsweise auf einem entsprechend angepassten Kraftübertragungselement erreicht werden kann.

Fig. 2f zeigt ein weiteres Ausführungsbeispiel einer Hülse 1f, hergestellt aus der in Fig. 2e gezeigten Hülse 1e. Dazu wurde das zweite Hülsenende 10 zusätzlich zur in Fig. 2e gezeigten Aufweitung nach innen umgebördelt wie durch die Pfeile 38 angedeutet. Die in Fig. 2f gezeigt Hülse 1f entspricht der in Fig. 1b gezeigten Hülse 1b.

Es ist ebenso denkbar, das zweite Hülsenende 10 umzubördeln, ohne eine vorherige Aufweitung des zweiten Hülsenendes 10 wie in Fig. 2e gezeigt durchzuführen. Ebenso ist es denkbar, lediglich das zweite Hülsenende 10 umzubördeln, ohne den Hülsenkörper 2 wie in Fig. 2d aufzuweiten.

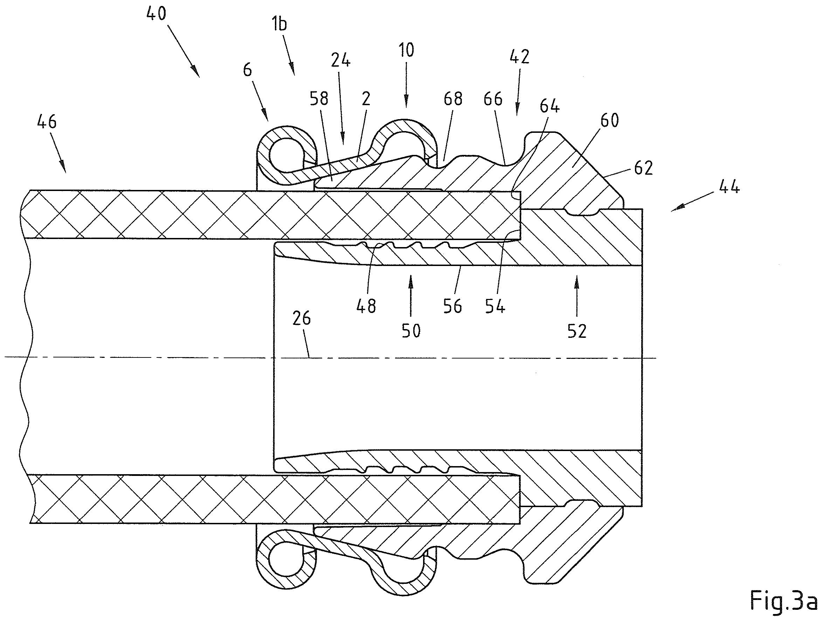

Fig. 3a zeigt ein Ausführungsbeispiel eines erfindungsgemäßen Systems 40 mit der Hülse 1b, einem Kraftübertragungselement 42, einem Fitting 44 und einem Rohrende 46, wobei die Hülse 1b teilweise auf das Kraftübertragungselement 42 aufgeschoben ist.

Das Fitting 44 weist einen ein Profil 48 aufweisenden Stützkörper 50 aus Metall, welcher aber auch aus einem Kunststoff hergestellt sein kann, und einen Grundkörper 52 auf. Das Fitting 44 weist am Grundkörper 52 eine in axialer Richtung gewandte Stoßfläche 54 für das Rohrende 46 auf. Das Profil 48 des Stützkörpers 50 besteht in diesem Fall aus vier ringförmig umlaufenden Lamellen oder Zähnen. Die Innenumfangsfläche 56 des Stützkörpers 50 und des Grundkörpers 52 ist im Wesentlichen zylinderförmig ausgebildet, wobei jedoch die Innenumfangsfläche an dem dem Grundkörper 52 abgewandten Ende des Stützkörpers 50 gegenüber der Achse 26 leicht angeschrägt ist, um zu sprunghafte Querschnittsveränderungen zu vermeiden.

Mit dem Grundkörper 52 des Fittings 44 ist ein im Wesentlichen zylindrisches Kraftübertragungselement 42 beispielsweise durch Verrasten, Verkleben oder Verschrauben verbunden. Das Kraftübertragungselement 42 weist an seinem ersten Ende 58 eine erste Öffnung und an seinem zweiten Ende 60 eine zweite Öffnung auf. Das Kraftübertragungselement 42 ist hier mit dem zweiten Ende 60 auf den Grundkörper 52 aufgeschoben und mit diesem verbunden. An dem zweiten Ende 60 weist das Kraftübertragungselement 42 einen Flanschabschnitt auf. An der Außenumfangsfläche des Flanschabschnitts ist zudem an der Stirnseite eine Fase 62 vorgesehen, welche as Interaktionsfläche mit einem Presswerkzeug dienen kann. Zudem weist auch der Flanschabschnitt an seinem radial einwärts ausgreifenden Bereich eine in axialer Richtung gewandte Stoßfläche 64 für das Rohrende 46 auf.

Auf seiner Außenumfangsfläche weist das Kraftübertragungselement 42 angrenzend an den Flanschabschnitt eine Rastvertiefung 66 auf. Der Außendurchmesser des Kraftübertragungselements 42 vergrößert sich abschnittsweise konisch vom ersten Ende 58 zum zweiten Ende 60 des Kraftübertragungselements 42. An der Außenumfangsfläche des Kraftübertragungselements 42 ist zwischen der Rastvertiefung 66 und dem ersten Ende 58 eine Haltevertiefung 68 angeordnet.

Zwischen die Außenumfangsfläche des Stützkörpers 50 des Fitting 44 und die Innenumfangsfläche des Kraftübertragungselements 42 ist ein Kunststoffrohrende 46 geschoben, welches an den Stoßflächen 54, 64 anliegt.

Vor dem Einschieben des Rohrendes 46 wurde die Hülse 1b mit dem zweiten Hülsenende 10 teilweise auf das Kraftübertragungselement 42 geschoben. Der durch das aufgeweitete und umgebördelte zweite Hülsenende 10 entstandene Rasthaken greift dabei in die Haltevertiefung 68 des Kraftübertragungselements 42 ein. Dadurch wird einer Bewegung der Hülse 1b von dem Kraftübertragungselement 42 herunter in einer Zwischenposition, bevor also die eigentlichen Pressvorgänge durchgeführt werden, vorgebeugt. Der Bereich 24 der Hülse 1b ist mit dem ersten Ende 58 des Kraftübertragungselements 42 in reibschlüssiger Anlage.

Das erste, eingerollte Hülsenende 6 kann nun eine gegenüber der Hülsenachse 26 geneigte Anlagefläche für ein Presswerkzeug bereitstellen. Bei ebenfalls geneigten Pressflächen des Presswerkzeugs kann durch eine radial einwärtige Bewegung des Presswerkzeugs eine axiale Bewegung der Hülse 1b erreicht werden. Dadurch, dass das erste Hülsenende 6 eingerollt ist, ist dieses besonders stabil.

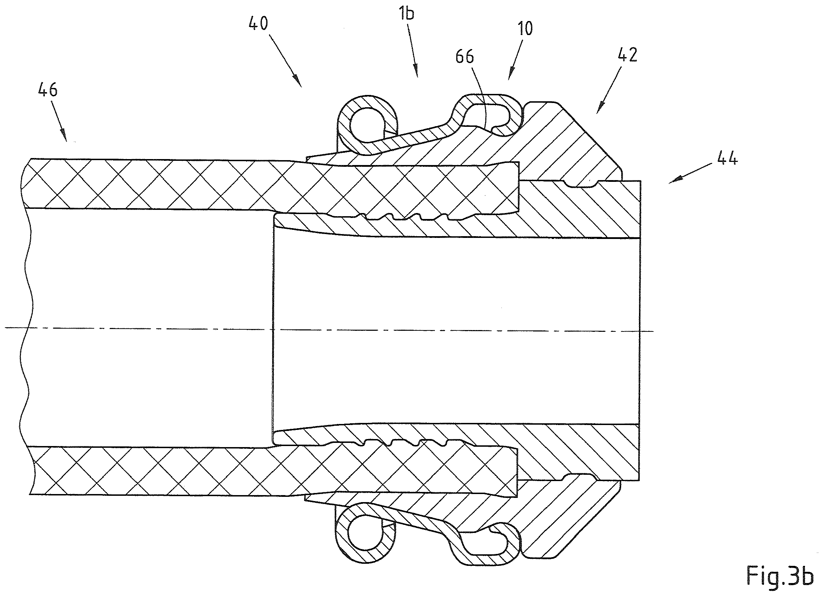

Das Ergebnis des eines sowohl axialen als auch anschließenden radial einwärtigen Pressvorgangs ist in Fig. 3b gezeigt. Fig. 3b zeigt das System aus Fig. 3a, wobei die Hülse 1b vollständig auf das Kraftübertragungselement 42 aufgeschoben ist und eine dichte Verbindung zwischen dem Rohrende 46 und dem Fitting 44 hergestellt ist.

Durch die Ausübung der Presskräfte wird die Hülse 1b in axialer Richtung auf das Kraftübertragungselement 42 in Richtung Flanschabschnitt bewegt. Durch die Neigung des Abschnitts 24 der Innenumfangsfläche der Hülse 1b und der korrespondierenden Abschnitte der Außenumfangsfläche des Kraftübertragungselements wird die in axialer Richtung ausgeübte Dynamik der Pressbewegung zumindest teilweise in radial einwärtig wirkende Presskräfte umgelenkt. Das Kraftübertragungselement 42 überträgt die Presskräfte auf das Rohrende 46, welches radial einwärts so umgeformt wird, dass die Profilierung 48 am Stützkörper 50 des Fittings 44 in das Material des Rohrendes 46 eingeformt wird, und somit ein Kraft- und Formschluss entstehen kann, welcher die Dichtheit der unlösbaren Verbindung der rohrförmigen Enden gewährleistet. Wie zu erkennen ist, wird dabei das erste Hülsenende 6 im Wesentlichen nicht verformt.

Nach dem axialen Pressvorgang liegt der Rasthaken am zweiten Hülsenende 10 der Hülse 1b der Rastvertiefung 66 des Kraftübertragungselements 42 gegenüber, sodass bereits eine axiale Bewegung der Hülse 1b von dem Kraftübertragungselement 42 herunter gehemmt sein kann.

Vorzugsweise ragt das zweite, aufgeweitete Hülsenden 10 der Hülse 1b nach dem axialen Pressvorgang über den Flanschabschnitt des Kraftübertragungselements radial auswärts leicht hervor und bietet somit einem Presswerkzeug einen günstigen Ansatzpunkt für eine radial einwärtige Pressbewegung.

Somit schließt sich dem axialen Pressvorgang in diesem Beispiel auch ein radial einwärtiger Pressvorgang an, wodurch ein Abschnitt der Hülse 1b, in diesem Beispiel das zweite Hülsenende 10 der Hülse 1b, welches den Rasthaken bildet, in die Rastvertiefung 66 eingeformt wird und somit eine stabile Verrastung der Hülse 1b mit dem Kraftübertragungselement 42 bewirkt. Das bereits durch die radiale einwärtige Verpressung verformte zweite Hülsenende 10 ist in Fig. 3b gezeigt. Weiterhin ist die Hülse 1b durch die Verpressung teilweise in die Außenumfangsfläche des Kraftübertragungselements 42 eingeformt. Durch die Verrastung und die teilweise Einformung kann dem Umstand entgegen gewirkt werden, dass sich die Hülse 1b von dem Kraftübertragungselement 42, beispielsweise auf Grund von durch Temperaturänderungen ausgelöste Materialausdehnungen bzw. -kontraktionen wieder löst, was Undichtigkeiten zur Folge haben könnte.

Fig. 4a zeigt ein Ausführungsbeispiel eines erfindungsgemäßen Systems 40' ähnlich dem aus Fig. 3a, wobei die Hülse 1g teilweise auf das Kraftübertragungselement 42 aufgeschoben ist, während Fig. 4b das System mit vollständig auf das Kraftübertragungselement 42 aufgeschobener Hülse 1g zeigt. Im Folgenden wird lediglich auf die Unterschiede zu dem bereits in Zusammenhang mit den Fig. 3a und 3b erläuterten Ausführungsbeispiel eingegangen. Das in den Fig. 4a und 4b gezeigt Ausführungsbeispiel des Systems 40' unterscheidet sich von dem in den Fig. 3a und 3b gezeigten in der verwendeten Hülse 1g. Auch die Hülse 1g ist der im System 40 verwendeten Hülse 1b ähnlich. Allerdings unterscheidet sich die hier verwendete Hülse 1g von der Hülse 1b im Bereich 24. Der Hülsenkörper 2 ist zwischen dem ersten Hülsenden 6 und dem zweiten Hülsenende 10 im Bereich 24 derart aufgeweitet, dass der Bereich 10 eine leichte Biegung nach außen aufweist. Dadurch muss im in Fig. 2d gezeigten Herstellungsschritt kein konischer, im Wesentlichen linearer Verlauf im Längsschnitt erzeugt werden, was die Herstellung der Hülse 1g vereinfacht. Dadurch liegt im Fig. 4a gezeigten Zustand der Bereich 24 der Hülse 1g nicht wie im in Fig. 3a gezeigten System 40 flächig an der Außenumfangsfläche des Kraftübertragungselements 42 an, sonder lediglich im reduzierten Bereich 70. Die Außenumfangfläche des Kraftübertragungselements 42 liegt im Bereich 70 also im Wesentlichen tangential an der Innenumfangsfläche der Hülse 1g an. Es hat sich allerdings gezeigt, dass dies zur Herstellung einer unlösbaren Verbindung unschädlich ist. Wie Fig. 4b zu entnehmen ist, ist die Hülse 1g des Systems 40' durch die Verpressung wiederum teilweise in die Außenumfangsfläche des Kraftübertragungselements 42 eingeformt und es entsteht wie in Fig. 3b gezeigt eine dichte Verbindung.

Somit können mit den Hülsen 1b - 1g Herstellungskosten eingespart werden und insbesondere die aus dem Stand der Technik bekannte Hülse 1a ersetzt werden, ohne allerdings auf Funktionen der Hülse vor, während und nach dem Pressvorgang verzichten zu müssen.

## Patentansprüche

1. Hülse für eine unlösbare Verbindung zweier rohrförmiger Enden (46, 44)
- mit einem im Wesentlichen zylindrischen Hülsenkörper (2),
- mit einem eine erste Hülsenöffnung (4) aufweisenden ersten Hülsenende (6) und
- mit einem eine zweite Hülsenöffnung (8) aufweiseneden zweiten Hülsenende (10),
- wobei der Hülsenkörper aus einem umgeformten Blechs (12) aus Metall geformt ist und zwei Kanten (14,16) des Blechs (12) miteinander verbunden sind,
- wobei mindestens ein Hülsenende (6,10) umgebogen ist **dadurch gekennzeichnet,**
- **dass** das erste Hülsenende (6) nach außen eingerollt ist.

2. Hülse nach Anspruch 1,
**dadurch gekennzeichnet,**
**dass** der Hülsenkörper (2) von dem ersten Hülsenende (6) zum zweiten Hülsenende (10) zumindest abschnittsweise konisch aufgeweitet ist.

3. Hülse nach Anspruch 1 oder 2,
**dadurch gekennzeichnet,**
**dass** das zweite Hülsenende (10) zumindest abschnittsweise aufgeweitet ist.

4. Hülse nach einem der Ansprüche 1 bis 3,
**dadurch gekennzeichnet,**
**dass** das zweite Hülsenende (10) nach innen umgebogen, insbesondere umgebördelt ist.

5. Hülse nach einem der Ansprüche 1 bis 4,
**dadurch gekennzeichnet,**
**dass** das Blech (12) aus rostfreiem Stahl besteht.

6. Verfahren zur Herstellung einer Hülse für eine unlösbare Verbindung zweier rohrförmiger Enden, insbesondere zur Herstellung einer Hülse nach einem der Ansprüche 1 bis 5,
- wobei ein Blech aus Metall bereitgestellt wird,
- wobei das Blech zu einem im Wesentlichen zylindrischen Hülsenkörper umgeformt wird, indem zwei Kanten des Blechs zueinander gebracht und miteinander verbunden werden, sodass an einem ersten Hülsenende eine erste Hülsenöffnung und an einem zweiten Hülsenende eine zweite Hülsenöffnung entsteht,
- wobei mindestens ein Hülsenende umgebogen wird und,
- wobei das erste Hülsenende nach außen eingerollt wird.

7. Verfahren nach Anspruch 6,
**dadurch gekennzeichnet,**
**dass** der Hülsenkörper von dem ersten Hülsenende zum zweiten Hülsenende zumindest abschnittsweise konisch aufgeweitet wird.

8. Verfahren nach Anspruch 6 oder 7,
**dadurch gekennzeichnet,**
**dass** das zweite Hülsenende, insbesondere nachdem der Hülsenkörper von dem ersten Hülsenende zum zweiten Hülsenende zumindest abschnittsweise konisch aufgeweitet wurde, zumindest abschnittsweise aufgeweitet wird.

9. Verfahren nach einem der Ansprüche 6 bis 8,
**dadurch gekennzeichnet,**
**dass** das zweite Hülsenende nach innen umgebogen, insbesondere umgebördelt wird.

10. System zum unlösbaren Verbinden zweier rohrförmiger Enden
- mit einer Hülse (1b, 1c, 1d, 1e, 1f) nach einem der Ansprüche 1 bis 5 und
- mit einem im Wesentlichen zylindrischen Kraftübertragungselement (42)
- mit einem eine erste Öffnung aufweisenden ersten Ende (58) und
- mit einem eine zweite Öffnung aufweiseneden zweiten Ende (60),
- wobei die Hülse (1b, 1c, 1d, 1e, 1f) mit dem zweiten Hülsenende (10) auf das erste Ende (58) des Kraftübertragungselement (42) aufschiebbar ist und
- wobei das Kraftübertragungselement (42) auf seiner Außenumfangsfläche wenigstens eine Rastvertiefung (66) aufweist.

11. System nach Anspruch 10,
**dadurch gekennzeichnet,**
**dass** der Außendurchmesser des Kraftübertragungselements (42) sich vom ersten Ende (58) zum zweiten Ende (60) des Kraftübertragungselements (42) zumindest abschnittsweise konisch vergrößert.

12. System nach Anspruch 10 oder 11,
**dadurch gekennzeichnet,**
**dass** an der Außenumfangsfläche des Kraftübertragungselements (42) zwischen der Rastvertiefung (66) und dem ersten Ende (58) eine Haltevertiefung (68) angeordnet ist.

13. System nach einem der Ansprüche 10 bis 13 weiterhin
- mit einem Rohrende (46) und
- mit einem rohrförmigen Fitting (44),
- wobei das Rohrende (46) zumindest teilweise auf das Fitting (44) und in das Kraftübertragungselement (42) eingeschoben ist und
- wobei die Hülse (1b, 1c, 1d, 1e, 1f) zumindest teilweise auf das Kraftübertragungselement (42) aufgeschoben ist.

## Claims

1. Sleeve for a non-detachable connection of two tubular ends (46, 44)
- having a substantially cylindrical sleeve body (2),
- having a first sleeve end (6) containing a first sleeve opening (4) and
- having a second sleeve end (10) containing a second sleeve opening (8),
- wherein the sleeve body is formed from a shaped sheet (12) of metal and two edges (14, 16) of the sheet (12) are connected to one another,
- wherein at least one sleeve end (6, 10) is bent,
**characterised in that**
- the first sleeve end (6) is rolled outwardly.

2. Sleeve according to Claim 1,
**characterised in that**
the sleeve body (2) is conically widened, at least in sections, from the first sleeve end (6) to the second sleeve end (10).

3. Sleeve according to Claim 1 or 2,
**characterised in that**
the second sleeve end (10) is widened at least in sections.

4. Sleeve according to any one of Claims 1 to 3,
**characterised in that**
the second sleeve end (10) is bent inwardly, in particular flanged.

5. Sleeve according to any one of Claims 1 to 4,
**characterised in that**
the sheet (12) is made of stainless steel.

6. Process for manufacturing a sleeve for a non-detachable connection of two tubular ends, in particular for manufacturing a sleeve according to any one of Claims 1 to 5,
- wherein a sheet of metal is provided,
- wherein the sheet is shaped into a substantially cylindrical sleeve body in that two edges of the sheet are brought together and connected to one another so that a first sleeve opening arises at a first sleeve end and a second sleeve opening arises at a second sleeve end,
- wherein at least one sleeve end is bent and
- wherein the first sleeve end is rolled outwardly.

7. Process according to Claim 6
**characterised in that**
the sleeve body is conically widened, at least in sections, from the first sleeve end to the second sleeve end.

8. Process according to Claim 6 or 7,
**characterised in that**
the second sleeve end is widened, at least in sections, in particular after the sleeve body has been conically widened, at least in sections, from the first sleeve end to the second sleeve end.

9. Process according to any one of Claims 6 to 8,
**characterised in that**
the second sleeve end is bent inwardly, in particular flanged.

10. System for connecting two tubular ends in a non-detachable way
- having a sleeve (1b, 1c, 1d, 1e, 1f) according to any one of Claims 1 to 5 and
- having a substantially cylindrical force-transmission element (42)
- having a first end (58) containing a first opening and
- having a second end (60) containing a second opening,
- wherein the sleeve (1b, 1c, 1d, 1e, 1f) may be pushed with the second sleeve end (10) onto the first end (58) of the force-transmission element (42) and
- wherein the force-transmission element (42) has at least one latching depression (66) on its outer circumferential face.

11. System according to Claim 10,
**characterised in that**
the outer diameter of the force-transmission element (42) increases conically, at least in sections, from the first end (58) to the second end (60) of the force-transmission element (42).

12. System according to Claim 10 or 11,
**characterised in that**
a holding depression (68) is arranged on the outer circumferential face of the force-transmission element (42), between the latching depression (66) and the first end (58).

13. System according to any one of Claims 10 to 13 furthermore
- having a tube end (46) and
- having a tubular fitting (44),
- wherein the tube end (46) is pushed at least partially onto the fitting (44) and into the force-transmission element (42) and
- wherein the sleeve (1b, 1c, 1d, 1e, 1f) is pushed at least partially onto the force-transmission element (42).

## Revendications

1. Manchon pour un raccordement indétachable de deux extrémités (46, 44) de forme tubulaire, ledit manchon
- comprenant un corps de manchon (2) essentiellement cylindrique,
- comprenant une première extrémité de manchon (6) présentant une première ouverture de manchon (4) et
- comprenant une seconde extrémité de manchon (10) présentant une seconde ouverture de manchon (8),
- où le corps du manchon est formé d'une tôle transformée en métal (12) et deux bords (14, 16) de la tôle (12) sont assemblés l'un à l'autre,
- où au moins une extrémité de manchon (6, 10) est recourbée,
**caractérisé**
- **en ce que** la première extrémité de manchon (6) est enroulée vers l'extérieur.

2. Manchon selon la revendication 1,
**caractérisé**
**en ce que** le corps de manchon (2) est élargi au moins partiellement, de façon conique, à partir de la première extrémité de manchon (6) jusqu'à la seconde extrémité de manchon (10).

3. Manchon selon la revendication 1 ou 2,
**caractérisé**
**en ce que** la seconde extrémité de manchon (10) est élargie au moins partiellement.

4. Manchon selon l'une quelconque des revendications 1 à 3,
**caractérisé**
**en ce que** la seconde extrémité de manchon (10) est recourbée vers l'intérieur, en particulier rabattue.

5. Manchon selon l'une quelconque des revendications 1 à 4,
**caractérisé**
**en ce que** la tôle (12) se compose d'un acier inoxydable.

6. Procédé pour la fabrication d'un manchon prévu pour un raccordement indétachable de deux extrémités de forme tubulaire, en particulier pour la fabrication d'un manchon selon l'une quelconque des revendications 1 à 5,
- où une tôle en métal est fournie,
- où la tôle est transformée en un corps de manchon essentiellement cylindrique, tandis que deux bords de la tôle sont rapprochés l'un vers l'autre et assemblés l'un à l'autre, de sorte qu'une première ouverture de manchon se forme au niveau d'une première extrémité de manchon et qu'une seconde ouverture de manchon se forme au niveau d'une seconde extrémité de manchon,
- où au moins une extrémité de manchon est recourbée et
- où la première extrémité de manchon est enroulée vers l'extérieur.

7. Procédé selon la revendication 6,
**caractérisé**
**en ce que** le corps de manchon est élargi au moins partiellement, de façon conique, à partir de la première extrémité de manchon jusqu'à la seconde extrémité de manchon.

8. Procédé selon la revendication 6 ou 7,
**caractérisé**
**en ce que** la seconde extrémité de manchon est élargie au moins partiellement, en particulier une fois que le corps de manchon a été élargi au moins partiellement, de façon conique, à partir de la première extrémité de manchon jusqu'à la seconde extrémité de manchon.

9. Procédé selon l'une quelconque des revendications 6 à 8,
**caractérisé**
**en ce que** la seconde extrémité de manchon est recourbée vers l'intérieur, en particulier rabattue.

10. Système servant au raccordement indétachable de deux extrémités de forme tubulaire, ledit système
- comprenant un manchon (1b, 1e, 1d, 1e, 1f) selon l'une quelconque des revendications 1 à 5, et
- comprenant un élément de transmission de force (42) essentiellement cylindrique,
- comprenant une première extrémité (58) présentant une première ouverture, et
- comprenant une seconde extrémité (60) présentant une seconde ouverture,
- où le manchon (1b, 1e, 1d, 1e, 1f) peut être glissé par la seconde extrémité de manchon (10) sur la première extrémité (58) de l'élément de transmission de force (42), et
- où l'élément de transmission de force (42) présente, sur sa surface de circonférence extérieure, au moins une cavité d'encliquetage (66).

11. Système selon la revendication 10,
**caractérisé**
**en ce que** le diamètre extérieur de l'élément de transmission de force (42) augmente au moins partiellement, de façon conique, à partir de la première extrémité (58) jusqu'à la seconde extrémité (60) de l'élément de transmission de force (42).

12. Système selon la revendication 10 ou 11,
**caractérisé**
**en ce qu'**une cavité d'arrêt (68) est disposée sur la surface de circonférence extérieure de l'élément de transmission de force (42), entre la cavité d'encliquetage (66) et la première extrémité (58).

13. Système selon l'une quelconque des revendications 10 à 13 comprenant en outre
- une extrémité tubulaire (46) et
- un raccord (44) de forme tubulaire,
- où l'extrémité tubulaire (46) est introduite au moins partiellement sur le raccord (44) et dans l'élément de transmission de force (42), et
- où le manchon (1b, 1e, 1d, 1e, 1f) est glissé au moins partiellement sur l'élément de transmission de force (42).
